(19) Europäisches Patentamt
European Patent Office
Office européen des brevets

(11) EP 2 980 150 B1

(12) **EUROPEAN PATENT SPECIFICATION**

(45) Date of publication and mention of the grant of the patent:
**01.11.2017 Bulletin 2017/44**

(21) Application number: **13880179.0**

(22) Date of filing: **25.12.2013**

(51) Int Cl.:
***C08L 23/04*** (2006.01)
***C08K 5/54*** (2006.01)
***G02B 6/44*** (2006.01)
***C08L 23/16*** (2006.01)
***C08K 3/22*** (2006.01)
***C08L 23/26*** (2006.01)
***H01B 11/00*** (2006.01)

(86) International application number:
**PCT/JP2013/084728**

(87) International publication number:
**WO 2014/155879 (02.10.2014 Gazette 2014/40)**

(54) **FLAME-RETARDANT RESIN COMPOSITION AND OPTICAL CABLE PROVIDED WITH SAID RESIN COMPOSITION**

FLAMMHEMMENDE HARZZUSAMMENSETZUNG UND OPTISCHES KABEL MIT DIESER HARZZUSAMMENSETZUNG

COMPOSITION DE RÉSINE IGNIFUGE ET CÂBLE OPTIQUE COMPORTANT LADITE COMPOSITION DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2013 JP 2013063781**

(43) Date of publication of application:
**03.02.2016 Bulletin 2016/05**

(73) Proprietor: **Furukawa Electric Co., Ltd.**
**Chiyoda-ku**
**Tokyo 100-8322 (JP)**

(72) Inventors:
- **CHIBA, Hiroki**
**Tokyo 100-8322 (JP)**
- **MIZUNO, Koichi**
**Tokyo 100-8322 (JP)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:

| | |
|---|---|
| **EP-A1- 0 906 933** | **CN-A- 102 952 313** |
| **JP-A- H07 296 649** | **JP-A- H09 296 083** |
| **JP-A- H10 324 782** | **JP-A- 2000 327 861** |
| **JP-A- 2001 166 188** | **JP-A- 2005 029 604** |
| **JP-A- 2009 114 230** | **JP-A- 2011 233 459** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 980 150 B1

## Description

### Technical Field

The present invention relates to a flame-retardant resin composition and an optical cable including the resin composition. The present invention relates more particularly to a flame-retardant resin composition which is excellent in extrusion moldability, mechanical characteristics, flame retardancy and the like, imparts slipperiness to a molded product surface, and ensures that a cable surface has reduced friction, and wire insertability to a conduit is satisfactory when the flame-retardant resin composition is used in an optical cable; and an optical cable including the resin composition.

### Background Art

Optical cables may be laid with one or more optical cables inserted in a conduit, and due to expansion of FTTH (Fiber To The Home) in recent years, a new optical cable may be laid with the optical cable additionally inserted in a conduit in which a plurality of optical cables have been inserted.

As a method for laying an optical cable, a method is commonly used in which a wire insertion rod for drawing in an optical cable is inserted in a conduit, the optical cable is attached to an end of the wire insertion rod, and the wire insertion rod is withdrawn to insert the optical cable. However, this method has the problem of poor working efficiency because a wire insertion rod is once inserted in a conduit, followed by drawing in an optical cable. Thus, for improving workability, a method for pushing an optical cable into a conduit without using a wire insertion rod has been desired.

However, in the case of a method for pushing an optical cable into a conduit without using a wire insertion rod (push laying), it is difficult to successfully push the optical cable due to friction between cables when the cable surface is hardly slippery (high friction/high friction coefficient). When the strip length is long, or the conduit has a curved part, push laying as described above is further difficult. As a method for solving such a difficulty, slipperiness (low friction) is imparted to the cable surface, and conventionally, wire insertability (ease of passage) to a conduit has been improved by applying a lubricating oil, a silicone spray or the like to a cable to impart slipperiness, but the method has not been preferred because it takes the labor of application, and causes the problem of degrading a sheath material by a lubricating oil, etc.

On the other hand, it is necessary to blend a large amount of a metal hydrate in a resin material that forms a sheath etc. of an optical cable for imparting high flame retardancy to satisfy the 60° inclining combustion test specified in JIS C3005, the vertical single-strip combustion test in IEC60332-1, and the vertical multi-strip combustion test in IEC60332-3-24 or IEEE St. 383, but when a large amount of a metal hydrate is blended, there is the problem of considerably impairing the mechanical characteristics of the resin material. Thus, in order to improve the mechanical characteristics etc. of a resin material, various flame-retardant resin compositions have been examined (e.g., refer to Patent Literatures 1 to 5).

### Citation List

### Patent Literatures

Patent Literature 1: JP 10-324782 A
Patent Literature 2: JP 11-12397 A
Patent Literature 3: JP 2000-327853 A
Patent Literature 4: JP 2007-504339 W
Patent Literature 5: JP 2008-7723 A

### Summary of Invention

### Technical Problem

However, when conventional resin materials represented by flame-retardant resin compositions as disclosed in the above-mentioned literatures are used as covering materials of optical cables, it is difficult to ensure that an optical cable surface has reduced friction, and wire insertability to a conduit is satisfactory in addition to securing such extrusion moldability that the outer diameter of the cable is stabilized, and the cable surface is free from foaming, mechanical characteristics and flame retardancy.

The present invention has been devised in view of the above-mentioned problems, and an object of the present invention is to provide a flame-retardant resin composition which is excellent in extrusion moldability, mechanical characteristics, flame retardancy and the like, and imparts slipperiness to a molded product surface, and ensures that a cable surface has reduced friction, and wire insertability to a conduit is satisfactory when the flame-retardant resin composition is used in an optical cable; and an optical cable including the resin composition.

Solution to Problem

For solving the above-mentioned problems, a flame-retardant resin composition according to the present invention includes as (A) a resin component the following components (a1) and (a2) : (a1) at least one of polyethylene and an ethylene-α olefin copolymer each having a density of 0.900 to 0.940g/$cm^3$: 70 to 98% by mass based on the total amount of the (A) resin component; and (a2) a polyolefin resin modified with an unsaturated carboxylic acid: 2 to 30% by mass based on the total amount of the (A) resin component, wherein the flame-retardant resin composition contains 95 to 220 parts by mass of (b1) magnesium hydroxide, 15 to 100 parts by mass of (b2) aluminum hydroxide and 2 to 15 parts by mass of (c) a silicone-based lubricant based on 100 parts by mass of the (A) resin component.

The flame-retardant resin composition according to the present invention is one wherein at least one of the (b1) magnesium hydroxide and the (b2) aluminum hydroxide is surface-treated with a silane coupling agent in the present invention described above.

The flame-retardant resin composition according to the present invention is used in an optical cable in the present invention described above.

An optical cable according to the present invention includes as a covering material the flame-retardant resin composition of the present invention described above.

Advantageous Effects of Invention

The flame-retardant resin composition according to the present invention contains as a resin component a specific amount of at least one of polyethylene and an ethylene-α olefin copolymer each having a density in a predetermined range; and a specific amount of a polyolefin resin modified with an unsaturated carboxylic acid, and contains a specific amount of magnesium hydroxide and aluminum hydroxide in combination as a flame retardant, and further a specific amount of a silicone-based lubricant with respect to the resin component, and thus the flame-retardant resin composition is excellent in extrusion moldability, mechanical characteristics, flame retardancy and the like, imparts slipperiness to a molded product surface, and ensures that a cable surface has reduced friction, and wire insertability to a conduit is satisfactory when the flame-retardant resin composition is used in an optical cable.

The optical cable according to the present invention includes as a covering material the flame-retardant resin composition according to the present invention, and is therefore given the above-mentioned effect, so that the cable surface is free from foaming, the cable outer diameter is stabilized, the optical cable has excellent mechanical characteristics, flame retardancy and the like, the cable surface has reduced friction, and also the optical cable is excellent in wire insertability to a conduit.

Brief Description of Drawing

Fig. 1 is a schematic view illustrating one example of a structure of an optical cable.

Description of Embodiments

Hereinafter, one aspect of the present invention will be described. A flame-retardant resin composition according to the present invention contains (a1) at least one of polyethylene and an ethylene-α olefin copolymer and (a2) an unsaturated carboxylic acid-modified polyolefin resin as (A) a resin component, and (b1) magnesium hydroxide, (b2) aluminum hydroxide and (c) a silicone-based lubricant as a basic configuration.

(A) Resin component:

The flame-retardant resin composition of the present invention contains (a1) at least one of polyethylene and an ethylene-α olefin copolymer and (a2) an unsaturated carboxylic acid-modified polyolefin resin as (A) a resin component as an essential component.

(a1) At least one of polyethylene and an ethylene-α olefin copolymer:

When the flame-retardant resin composition of the present invention contains (a1) polyethylene and an ethylene-α olefin copolymer, mechanical strength and low friction characteristics can be improved. In the flame-retardant resin composition of the present invention, each of polyethylene and an ethylene-α olefin copolymer may be used alone, or may be used in combination.

Examples of the polyethylene include polyethylene resins such as LDPE (low-density polyethylene), LLDPE (linear low-density polyethylene), MDPE (medium-density polyethylene) and LLDPE (linear low-density polyethylene) synthesized in the presence of a metallocene catalyst. Among these types of polyethylene, LLDPE synthesized in the presence of a metallocene catalyst is preferably used. These types of polyethylene may be used alone, or may be used in combination of two or more thereof.

Examples of the ethylene-α olefin copolymer include copolymers of ethylene and an α olefin with a carbon number of 4 to 12, and examples of the α olefin include 1-butene, 1-hexene, 4-methyl-1-pentene, 1-octene, 1-decene and 1-dodecene. These ethylene-α olefin copolymers may be used alone, or may be used in combination of two or more thereof.

The density of the above-mentioned polyethylene or ethylene-α olefin copolymer to be used is in a range of 0.900 to 0.940 g/cm$^3$. By selecting one having a density in the above-mentioned range, filler receptivity of, for example, a flame retardant such as (b1) magnesium hydroxide and (b2) aluminum hydroxide as described later is improved, so that excellent mechanical characteristics are achieved, and the rigidity of the (A) resin component is improved, so that excellent wire insertability is achieved. The density of the polyethylene or ethylene-α olefin copolymer is especially preferably 0.915 to 0.930 g/cm$^3$.

As the polyethylene or ethylene-α olefin copolymer, one resin having a density in the above-mentioned range may be used as a matter of course, and also two or more resins each having a density in a range of 0.900 to 0.940 g/cm$^3$ may be mixed, and used with the density adjusted to fall within such a range.

The density of a mixed resin obtained by mixing two or more resins may be calculated in accordance with, for example, the following formula. In the formula, ρ denotes the density (g/cm$^3$), A denotes the content (% by mass) of each ethylene-α olefin copolymer or polyethylene where the total amount of the component (a1) is 100% by mass ($A_i$ refers to ith A), and B denotes the density (g/cm3) of each ethylene-α olefin copolymer or polyethylene (Bi refers to ith B).

[Numerical Formula 1]

$$\rho(g/cm^3) = \Sigma(Ai \times Bi)/100$$

For example, when two resins: resin 1 and resin 2 are used as the component (a1), with the density of resin 1 being 0.940 g/cm$^3$ and the density of resin 2 being 0.900 g/cm$^3$, and resin 1 and resin 2 are blended in a ratio of 70/30 (the amount of resin 1 is 70% by mass based on the total amount of the component (a1) and the amount of resin 2 is 30% by mass based on the total amount of the component (a2), the density ρ(g/cm$^3$) is calculated to be 0.928 g/cm$^3$ from the following formula.

[Numerical Formula 2]

$$\rho = \{(0.940 \times 70) + (0.900 \times 30)\}/100 = 0.928\ g/cm^3$$

In the flame-retardant resin composition according to the present invention, the content of the (a1) polyethylene or ethylene-α olefin copolymer in terms of the total amount thereof is 70 to 98% by mass based on the total amount of the (A) resin component. When the content is less than 70% by mass, the elongation characteristic may be deteriorated. On the other hand, when the content is more than 98% by mass, tensile strength and rigidity may be reduced, and wire insertability may be adversely affected. The content of the polyethylene or ethylene-α olefin copolymer in terms of the total amount thereof is preferably 75 to 90% by mass, especially preferably 80 to 85% by mass based on the total amount of the (A) resin component.

Examples of the product commercially available as the (a1) polyethylene and an ethylene-α olefin copolymer, which can be used in the flame-retardant resin composition according to the present invention, may include "KERNEL" and "NOVATEC" (trade name: manufactured by Japan Polyethylene Corporation) and "Evolue" (trade name: manufactured by Prime Polymer Co., Ltd.).

(a2) Unsaturated carboxylic acid-modified polyolefin resin:

When the flame-retardant resin composition according to the present invention contains (a2) an unsaturated carboxylic acid-modified polyolefin (i.e. a polyolefin resin modified with an unsaturated carboxylic acid; the same applies hereinafter), mechanical characteristics, wear resistance and the like can be improved. The amount of modification with an unsaturated carboxylic acid in the unsaturated carboxylic acid-modified polyolefin resin is preferably 0.5 to 15% by mass based on the amount of the polyolefin resin.

Examples of the polyolefin resin that can be used in the (a2) unsaturated carboxylic acid-modified polyolefin resin may include polyethylene, polypropylene, polybutene and polymethylpentene, and these polyolefin resins may be used alone, or may be used in combination of two or more thereof. In the flame-retardant resin composition of the present invention, the polyolefin resin that can be used in the unsaturated carboxylic acid-modified polyolefin resin is preferably polyethylene, polypropylene or the like, especially preferably polyethylene from the viewpoint of a balance of the mechanical strength characteristic and the elongation characteristic.

As the unsaturated carboxylic acid, for example, acrylic acid, methacrylic acid, maleic acid, itaconic acid, fumaric acid, maleic anhydride, itaconic anhydride, fumaric anhydride and the like can be used. These unsaturated carboxylic acids may be used alone, or may be used in combination of two or more thereof.

Modification of The polyolefin resin in the (a2) unsaturated carboxylic acid-modified polyolefin resin can be performed by heating and kneading the polyolefin resin and the unsaturated carboxylic acid in the presence of an organic peroxide.

The content of the (a2) polyethylene or ethylene-$\alpha$ olefin copolymer in the flame-retardant resin composition of the present invention is 2 to 30% by mass based on the total amount of the (A) resin component. When the content is in the above-mentioned range, the resin is strongly bonded to metal hydrates such as (b1) magnesium hydroxide and (b2) aluminum hydroxide, so that rigidity is imparted to the resin composition in addition to mechanical characteristics and wear resistance, and therefore an effect of excellent wire insertability can be obtained. On the other hand, when the content is less than 2% by mass, rigidity may be reduced to deteriorate wire insertability, and when the content is more than 30% by mass, flexibility and the elongation characteristic may be deteriorated. The content of the unsaturated carboxylic acid-modified polyolefin resin is preferably 5 to 15% by mass based on the total amount of the (A) resin component.

Examples of the product commercially available as the (a2) unsaturated carboxylic acid-modified polyolefin resin, which can be used in the flame-retardant resin composition according to the present invention, may include "ADTEX" (trade name: manufactured by Japan Polyethylene Corporation), "ADMEN" (trade name: manufactured by Mitsui Chemicals, Inc.), "Fusabond" (trade name: manufactured by Du Pont) and "POLYBOND" (trade name: manufactured by Chemtura Corporation).

As the (A) resin component in the flame-retardant resin composition of the present invention, resin materials other than essential components, i.e. the components (a1) and (a2) can be used as long as the purpose and effect of the present invention are not impaired. As other resin materials, resin materials that are commonly used as constituent materials of cables such as optical cables can be used. (a3) A propylene-based resin will be shown below as an example, the resin material that can be used is not limited thereto, and desired resins that are commonly used as constituent materials of cables such as optical cables can be used as long as the purpose and effect of the present invention are not impaired.

(a3) Propylene-based resin:

When the flame-retardant resin composition of the present invention contains (a3) a propylene-based resin, rigidity can be imparted to the resin composition to achieve satisfactory cable insertability.

As the (a3) propylene-based resin, for example, propylene homopolymers (homopolypropylene resins), ethylene-propylene random copolymers, ethylene-propylene block copolymers and the like can be used. These propylene-based resins may be used alone, or may be used in combination of two or more thereof. In the flame-retardant resin composition of the present invention, use of an ethylene-propylene block copolymer or the like as the propylene-based resin is preferred because satisfactory tensile characteristics, heating resistance and heating deformation characteristics can be obtained.

Here, the "ethylene-propylene random copolymer" refers to one having an ethylene component content of approximately 1 to 5% by mass with an ethylene component randomly caught in a propylene chain. Here, the "ethylene-propylene random copolymer" refers to one having an ethylene component content of approximately 5 to 15% by mass with an ethylene component and a propylene component existing as independent components.

The MFR (value measured in accordance with ASTM D-1238) of the (a3) propylene-based resin is preferably 0.1 to 60 g/10 minutes, further preferably 0.1 to 25 g/10 minutes, especially preferably 0.3 to 15 g/10 minutes.

The content of the (a3) propylene-based resin in the flame-retardant resin composition of the present invention

is preferably 0 to 20% by mass based on the total amount of the (A) resin component. The propylene-based resin has a melting point of about 140 to 165°C, which is higher than the melting point of the polyethylene-based resin, and therefore when the content of the propylene-based resin is more than 20% by mass, an extrusion molding temperature of 200°C or higher is required, so that aluminum hydroxide is decomposed to cause foaming, resulting in impairment of the external appearance of the cable and deterioration of optical characteristics. The content of the (a3) propylene-based resin is especially preferably 0 to 10% by mass based on the total amount of the (A) resin component.

(b1) Magnesium hydroxide and (b2) aluminum hydroxide:

In the present invention, (b1) magnesium hydroxide and (b2) aluminum hydroxide, each of which is a metal hydrate, are used in combination as a flame retardant (hereinafter, (b1) magnesium hydroxide and (b2) aluminum hydroxide may be collectively referred to as a "flame retardant" for the sake of convenience). When magnesium hydroxide and aluminum hydroxide are used in combination, flame retardancy is improved as compared to a case where each of magnesium hydroxide and aluminum hydroxide is used alone. The average particle size (average primary particle size) of each of (b1) magnesium hydroxide and (b2) aluminum hydroxide is not particularly limited, but for example, it is preferably in a range of 0.1 to 5.0 um, especially preferably in a range of 0.3 to 2.0 um.

For the surface treatment of (b1) magnesium hydroxide and (b2) aluminum hydroxide, they may be non-surface-treated (hereinafter, may be simply described as "non-treated"), or may be surface-treated, but in the present invention, it is preferred that at least one of (b1) magnesium hydroxide and (b2) aluminum hydroxide is surface-treated is surface-treated with a silane coupling agent for causing an interaction with the (A) resin component to improve the rigidity of the resin composition, so that excellent wire insertability is achieved. Examples of the surface treatment include a fatty acid treatment, a phosphoric acid treatment, a titanate treatment, and a treatment with a silane coupling agent etc.

The silane coupling agent to be used for the surface treatment is preferably one having a vinyl group, a methacryloxy group, a glycidyl group or an amino group at the end. Specific examples include vinyltrimethoxysilane, vinyltriethoxysilane, glycidoxypropyltrimethoxysilane, glycidoxypropyltriethoxysilane, glycidoxypropylmethyldiethoxysilane, methacryloxypropyltrimethoxysilane, methacryloxypropyltriethoxysilane, methacryloxypropylmethyldimethoxysilane, mercaptopropyltrimethoxysilane, mercaptopropyltriethoxysilane, aminopropyltriethoxysilane, aminopropyltrimethoxysilane, N-(β-aminoethyl)-γ-aminopropyltripropylmethyldimethoxysilane and N-(β-aminoethyl)-γ-aminopropyltripropyltrimethoxysilane. Among these silane coupling agents, vinyltrimethoxysilane, vinyltriethoxysilane, methacryloxypropyltriethoxysilane, methacryloxypropylmethyldimethoxysilane and the line are preferred. When metal hydrates such as (b1) magnesium hydroxide and (b2) aluminum hydroxide are to be surface-treated with a silane coupling agent, one silane coupling agent may be used, or two or more silane coupling agents may be used in combination to perform the surface treatment.

As the method for surface treatment with a silane coupling agent, the treatment can be performed by a method that is normally used, and for example, non-treated magnesium and aluminum hydroxide which are not surface-treated can be dry-blended with a silane coupling agent beforehand, or a wet treatment can be performed, or a silane coupling agent can be blended during kneading to perform the surface treatment. An amount of the silane coupling agent sufficiently for the surface to be performed is appropriately added, and specifically the content of the silane coupling agent to be used may be in a range of 0.1 to 2.5% by mass, and is preferably 0.2 to 1.8% by mass, especially preferably 0.3 to 1.0% by mass based on the total amount of metal hydrates such as magnesium hydroxide and aluminum hydroxide.

Magnesium hydroxide surface-treated with a silane coupling agent beforehand can also be acquired. Examples of magnesium hydroxide surface-treated with a silane coupling agent include "KISUMA 5L", "KISUMA 5N" and "KISUMA 5P" (each of which is trade name: manufactured by Kyowa Chemical Industry Co., Ltd.), and "MAGSEEDS S4" and "MAGSEEDS S6" (each of which is trade name: manufactured by Konoshima Chemical Co., Ltd.). On the other hand, examples of magnesium hydroxide, the surface of which is not treated, include "KISUMA 5" (trade name: manufactured by Kyowa Chemical Industry Co., Ltd.).

Examples of aluminum hydroxide surface-treated with a silane coupling agent include "HIGILITE H42ST-V" (trade name: manufactured by Showa Denko K.K.). Examples of aluminum hydroxide, the surface of which is not treated, include "HIGILITE H42M" (trade name: manufactured by Showa Denko K.K.), "BF-013" (trade name: manufactured by Nippon Light Metal Company, Ltd.) and Martinal (trade name: manufactured by Albemarle Corporation).

The content of the (b1) magnesium hydroxide in the flame-retardant resin composition of the present invention is 95 to 220 parts by mass based on 100 parts by mass of the (A) resin component. When the content of magnesium hydroxide is less than 95 parts by mass, flame retardancy may be degraded, and when the content of magnesium hydroxide is more than 220 parts by mass, mechanical characteristics may be deteriorated. The content of magnesium hydroxide is preferably 100 to 180 parts by mass, especially preferably 130 to 170 parts by mass based on 100 parts by mass of the (A) resin component.

The content of the (b2) aluminum hydroxide in the flame-retardant resin composition of the present invention is 15 to 100 parts by mass based on 100 parts by mass of the (A) resin component. When the content of aluminum

hydroxide is less than 15 parts by mass, flame retardancy may be degraded, and when the content of aluminum hydroxide is more than 100 parts by mass, mechanical characteristics may be deteriorated, and in addition, extrusion moldability may be adversely affected such that aluminum hydroxide is decomposed during extrusion molding, so that an insulating layer is foamed to deteriorate the external appearance of a molded article such as an insulated wire. The content of aluminum hydroxide is preferably 20 to 80 parts by mass, especially preferably 40 to 60 parts by mass based on 100 parts by mass of the (A) resin component.

The sum of the contents of (b1) magnesium hydroxide and (b2) aluminum hydroxide is preferably 150 to 250 parts by mass based on 100 parts by mass of the (A) resin component. When the sum of the contents of (b1) magnesium hydroxide and (b2) aluminum hydroxide is in such a range, both excellent mechanical characteristics and flame retardancy can be secured. The sum of the contents of magnesium hydroxide and aluminum hydroxide is especially preferably 180 to 220 parts by mass based on 100 parts by mass of the (A) resin component.

(c) Silicone-based lubricant:

When a silicone-based lubricant is added as a lubricant to the flame-retardant resin composition of the present invention, the lubricant acts as a flame retardant auxiliary that imparts flame retardancy to the resin composition to improve the flame retardancy thereof. In the case where the flame-retardant resin composition is used as a covering material etc. of an optical cable, the lubricant exhibits an effect of imparting slipperiness to improve wire insertability and reduce external damage. When among lubricants, a silicone-based lubricant is used, surface slipperiness is most preferably achieved, so that excellent wire insertability can be imparted.

Examples of the silicone-based lubricant include silicone gum, silicone powder and silicone oil, and among them silicone gum is preferably used. When the silicone-based lubricant is liquid (silicone oil etc.), it may extremely ooze out to the cable surface, so that the external appearance and productivity may be adversely affected, and when the silicone-based lubricant is completely resinous material such as silicone rubber, slipperiness is not sufficiently imparted, and thus an expected effect may not be exhibited. Use of silicone gum is preferred because the above-mentioned problems can be avoided.

Preferably, silicone gum having a weight average molecular weight of 100000 or more is used. When such high-molecular-weight silicone gum is used, the lubricant is tangled with molecules of constituent materials, so that a surface state can be maintained over a long period of time. Especially preferably, silicone gum having a weight average molecular weight of 100000 to 800000 is used. As such (high-molecular-weight) silicone gum, for example, "CF-9150" (trade name: manufactured by Dow Corning Toray Silicone Co., Ltd.), "X21-3043" (trade name: manufactured by Shin-Etsu Polymer Co., Ltd.) and the like can be used.

Here, the weight average molecular weight can be measured by, for example, GPC (gel permeation chromatography) under the following conditions.

GPC device: HLC-8120GPC (trade name; manufactured by TOSOH CORPORATION)
Column: TSK gel SuperHM-H/4000/H3000/H2000 (trade name; manufactured by TOSOH CORPORATION)
Flow rate: 0.6 ml/minute
Concentration: 0.3% by mass
Injection amount: 20 μl
Column temperature: 40°C

The kinematic viscosity of silicone gum at 25°C is preferably 10000 cSt or more. The kinematic viscosity is a value obtained by measuring a viscosity by a rotational viscometer at 25°C, and converting the viscosity into a kinematic viscosity. By using silicone gum having the above-mentioned kinematic viscosity, silicone can be favorably bled out to the cable surface, so that slipperiness can be obtained.

The content of the (c) silicone-based lubricant in the flame-retardant resin composition of the present invention is 2 to 15 parts by mass based on 100 parts by mass of the (A) resin component. When the flame-retardant resin composition contains a silicone-based lubricant in an amount as described above, slipperiness can be suitably imparted to improve wire insertability. On the other hand, when the content of the silicone-based lubricant is less than 2 parts by mass, wire insertability may be adversely affected when the flame-retardant resin composition is used in an optical cable etc., and when the content of the silicone-based lubricant is more than 15 parts by mass, the cable outer diameter may significantly vary to adversely affect extrusion moldability (productivity) of the cable because a screw of an extruder slips to destabilize discharge. The content of the (c) silicone-based lubricant in the flame-retardant resin composition of the present invention is preferably 3 to 15 parts by mass, especially preferably 6 to 10 parts by mass based on 100 parts by mass of the (A) resin component.

(d) Optional components:

In addition to the above-mentioned essential components, various kinds of additives that are commonly used in various kinds of cables such as optical cables, electric wires, cords, tubes, electric wire components, sheets and the like, e.g. an antioxidant, a metal deactivator, a flame retardant (auxiliary), a filler, a lubricant (other than the (c) silicone-based lubricant), a weathering stabilizer and the like can be blended in the flame-retardant resin composition of the present invention as long as the purpose and effect of the present invention are not impaired.

Examples of the antioxidant include amine-based antioxidants such as 4,4'-dioctyl-diphenylamine, N,N'-diphenyl-p-phenylenediamine and polymerized products of 2,2,4-trimethyl-1,2-dihydroquinoline; phenol-based antioxidants such as pentaerythrityl-tetrakis (3-(3,5-di-t-butyl-4-hydroxyphenyl)propionate), octadecyl-3-(3,5-di-t-butyl-4-hydroxyphenyl)propionate and 1,3,5-trimethyl-2,4,6-tris(3,5-di-t-butyl-4-hydroxybenzyl)benz ene; and sulfur-based antioxidants such as bis(2-methyl-4-(3-n-alkylthiopropionyloxy)-5-t-butylphenyl)sul fide, 2-mercaptobenzimidazole and zinc salts thereof, and pentaerythritol-tetrakis(3-lauryl-thiopropionate).

Examples of the metal deactivator include N,N'-bis(3-(3,5-di-t-butyl-4-hydroxyphenyl)propionyl)hydrazine, 3-(N-salicyloyl)amino-1,2,4-triazole and 2,2'-oxamide-bis-(ethyl-3-(3,5-di-t-butyl-4-hydroxyphenyl)prop ionate).

Examples of the flame retardant (auxiliary) and filler include carbon, clay, zinc oxide, tin oxide, titanium oxide, magnesium oxide, molybdenum oxide, antimony trioxide, silicone compounds, quartz, talc, calcium carbonate, magnesium carbonate, white carbon and triazine derivative compounds, and particularly triazine derivative compounds are preferred. Particularly, excellent flame retardancy can be achieved by adding a triazine derivative compound because a nitrogen gas blocks a flame at the time of combustion.

The triazine derivative compound acts as a flame retardant auxiliary when added to the flame-retardant resin composition of the present invention, and by using the triazine derivative compound in combination with metal hydrates such as (b1) magnesium hydroxide and (b2) aluminum hydroxide, a synergistic effect can be obtained. The content of the triazine derivative compound when it is added in the present invention is preferably 10 to 60 parts by mass, especially preferably 15 to 40 parts by mass based on 100 parts by mass of the (A) resin component.

The particle size (average particle size) of the triazine derivative compound is preferably as fine (small) as possible. Specifically, the average particle size of the triazine derivative compound is preferably 10 μm or less, further preferably 7 μm or less, especially preferably 5 μm or less.

Examples of the triazine derivative compound that can be used in the present invention may include cyanuric acid, melamine, melamine derivatives and melamine cyanurate, and among them, melamine cyanurate is preferably used. These triazine derivative compounds may be used alone, or may be used in combination of two or more thereof. Examples of melamine cyanurate that can be used may include MC6000 (trade name: manufactured by Nissan Chemical Industries, Limited).

The structure of the melamine cyanurate compound is represented by the following chemical structure.

[Chemical Formula 1]

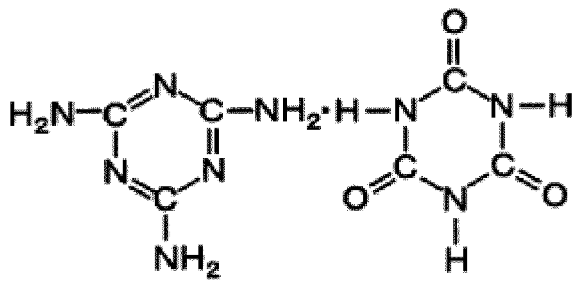

Examples of the lubricant other than the (c) silicone-based lubricant include lubricants based on hydrocarbons, fatty acid, fatty acid amides, esters, alcohols and metal soaps. Examples of the weathering stabilizer include hindered amine-based weathering stabilizers.

Hereinafter, a method for producing the flame-retardant resin composition and the optical cable according to the present invention will be described.

The (A) resin component, (b1) magnesium hydroxide, (b2) aluminum hydroxide, the (c) silicone-based lubricant, and further, other components such as (d) optional components are added, and heated and kneaded. Kneading conditions such as kneading temperature and kneading time can be appropriately set, and for example, the kneading temperature is equal to or higher than the melting temperature of the (A) resin component. For example, the kneading temperature is preferably 160 to 200°C.

For the kneading method, a device that is used for rubber, plastic and the like, e.g. a single screw extruder, a twin screw extruder, a roll, a Banbury mixer, any kneader or the like is used. By using such a device, a flame-retardant resin composition with the components dispersed uniformly can be obtained.

The flame-retardant resin composition according to the present invention as described above contains as a resin component a specific amount of at least one of polyethylene and an ethylene-$\alpha$ olefin copolymer each having a density in a predetermined range; and a specific amount of a polyolefin resin modified with an unsaturated carboxylic acid, contains a specific amount of magnesium hydroxide and aluminum hydroxide in combination as a flame retardant, and further a specific amount of a silicone-based lubricant with respect to the resin component, and thus the flame-retardant resin composition is excellent in extrusion moldability, mechanical characteristics, flame retardancy and the like, and imparts slipperiness to a molded product surface, and ensures that a cable surface has reduced friction, and wire insertability to a conduit is satisfactory when the flame-retardant resin composition is used in an optical cable.

The flame-retardant resin composition of the present invention can be used as a constituent material for various kinds of molded products such as electric wires and cables for general electronic devices, or optical cables, and can be preferably used particularly as a covering material of an optical cable. In the optical cable according to the present invention including the flame-retardant resin composition as a covering material, the cable surface is free from foaming, the cable outer diameter is stabilized, the optical cable has excellent mechanical characteristics, flame retardancy and the like, the cable surface has reduced friction, and also the optical cable is excellent in wire insertability to a conduit. The above-mentioned optical cable of the present invention can be easily and conveniently produced by using the flame-retardant resin composition of the present invention to cover the periphery of an optical fiber such as a glass optical fiber covered with, for example, an ultraviolet ray-curable resin or a thermosetting resin, and tension member etc. which is composed of a FRP using, for example, an aramid fiber bundle or aramid fibers as reinforcement fibers, a steel wire and the like as necessary, and has an outer diameter of, for example, 0.1 to 1.0 mm.

Fig. 1 is a schematic view illustrating one example of a structure of an optical cable. The optical cable 1 shown in Fig. 1 can be obtained by extruding the flame-retardant resin composition of the present invention as a covering material 2 to cover the periphery of a glass optical fiber 3 covered with, for example, an ultraviolet ray-curable resin (not illustrated), and tension members 4 each covered with an adhesive layer 5, with notches 6 provided at the central portions. The configuration of the optical fiber 1 is not limited to the configuration in Fig. 1 as a matter of course, and for example, the type, size and number of optical fibers such as the glass optical fiber 3 and tension members 4 in Fig. 1 can be freely selected. The outer diameter (long diameter, short diameter) and cross-sectional shape of the optical cable 1, the shape and size of the notch 6, and whether the notch 6 is formed or not can be freely selected.

Extrusion molding for obtaining an optical cable by extruding the flame-retardant resin composition of the present invention to cover an optical fiber etc. can be carried out by extruding the flame-retardant resin composition to cover the periphery of the optical fiber etc. using a general extrusion molding machine. The temperature of the extrusion molding machine at this time can be determined by the type of the flame-retardant resin composition, and conditions of the taking-over speed of the optical fiber such as a glass optical fiber, the tension member and the like, but for example, it is preferably about 170°C at the cylinder section, and about 185°C at the cross head section.

The optical cable extrusion-covered with the flame-retardant resin composition of the present invention may be given excellent flame retardancy through a mechanism as described below.

The decomposition temperature of (b1) magnesium hydroxide as a flame retardant that forms the flame-retardant resin composition of the present invention is generally 300 to 350°C, while the decomposition temperature of (b2) aluminum hydroxide is generally 200 to 250°C, i.e. lower by about 100°C than that of (b1) magnesium hydroxide. Therefore, it is considered that by using both the metal hydrates in combination, an endothermic reaction can be caused to occur over a wide temperature range of 200 to 350°C.

For example, in the case of a vertical multi-strip combustion test in IEEE St.383, a plurality of cable samples are vertically laid in such a manner that a predetermined amount of a non-metal part exists. Thereafter, a test is conducted in which the lower part of the sample is kept in contact with a flame from a burner for 20 minutes to cause fire spreading. In this test, first (b2) aluminum hydroxide causes an endothermic reaction in the early stage, and therefore elevation of the resin temperature of a cable which is combusted is retarded, so that the resin can be carbonized. Subsequently, the endothermic reaction of (b2) aluminum hydroxide is completed, and an endothermic reaction of (b1) magnesium hydroxide then occurs, so that the resin can be completely carbonized to suppress fire spreading.

In addition, since (b2) aluminum hydroxide has an endothermic amount higher about 10% than that of (b1) magnesium hydroxide, flame retardancy can be improved as compared to a case where (b1) magnesium hydroxide is used alone.

A phenomenon as described above similarly occurs in other combustion test, and thus excellent flame retardancy may be achieved due to the endothermic reaction over a wide temperature range. Examples

Hereinafter, the present invention will be described in detail based on examples and comparative examples, but the present invention is not limited to these examples.

[Examples 1 to 12 and Comparative Examples 1 to 10]

Components ((A) resin component, flame retardants ((b1) magnesium hydroxide and (b2) aluminum hydroxide), (c) silicone-based lubricant and (d) optional components), the compositions of which are shown in Tables 1 and 2, were mixed using a Banbury mixer, melted and kneaded, and then pelletized to obtain a flame-retardant resin composition (compound).

Next, using an extruder having a screw diameter of 50 mmφ (L/D = 25.8), the obtained flame-retardant resin composition (compound) was extruded onto a glass optical fiber covered with an ultraviolet ray-curable resin and a steel wire covered with an adhesive layer under extrusion temperature conditions of a die temperature of 185°C, and C3 = 185°C, C2 = 180°C and C1 = 170°C toward the feeder side, so that the optical fiber and the steel wire were covered with each of the flame-retardant resin composition shown in Tables 1 and 2 with notches provided at the central portions, thereby obtaining an optical cable including the flame-retardant resin composition as a covering material and having a cross section as shown in Fig. 1 (outer diameter: 1.66 ($L_1$ in Fig. 1) mm × 2.00 ($L_2$ in Fig. 1) mm).

In Tables 1 and 2, the value (content) for each component shows an amount of the component in % by mass where the total amount of the (A) resin component (total amount of components (a1) and (a2)) is 100% by mass for the components (a1) and (a2) as the (A) resin component, and shows an amount of the component in parts by mass where the total amount of the (A) resin component is 100 parts by mass for the components (b1), (b2), (c) and (d).

As the components, the compositions of which are shown in Tables 1 and 2, the following materials were used.

(a1) Ethylene-α olefin copolymer:

(1-1) ethylene-1-butene copolymer (density: 0.922 g/cm$^3$) (trade name: NOVATEC UE320 manufactured by Japan Polyethylene Corporation)
(1-2) ethylene-1-hexene copolymer (density: 0.903 g/cm$^3$) (trade name: Evolue SP0540 manufactured by Prime Polymer Co., Ltd.)
(1-3) ethylene-1-hexene copolymer (density: 0.938 g/cm$^3$) (trade name: Evolue SP4030 manufactured by Prime Polymer Co., Ltd.)
(1-4) ethylene-propylene-1-hexene copolymer (density: 0.898 g/cm$^3$) (trade name: KERNEL KF360T manufactured by Japan Polyethylene Corporation)
(1-5) ethylene-1-hexene copolymer (density: 0.944 g/cm$^3$) (trade name: UMERIT 4540F manufactured by Ube-Maruzen Polyethylene Co, Ltd.)

(a2) Polyolefin resin modified with unsaturated carboxylic acid (unsaturated carboxylic acid-modified polyolefin resin):

(2) maleic acid-modified polyethylene (trade name: Fusabond E226Y manufactured by Du Pont)

(b1) Magnesium hydroxide:

(3-1) magnesium hydroxide surface-treated with silane coupling agent (trade name: KISUMA 5L manufactured by Kyowa Chemical Industry Co., Ltd.)
(3-2) non-surface-treated magnesium hydroxide (trade name: KISUMA 5 manufactured by Kyowa Chemical Industry Co., Ltd.)

(b2) Aluminum hydroxide:

(4-1) aluminum hydroxide surface-treated with silane coupling agent (trade name: HIGILITE H42ST-V manufactured by Showa Denko K.K.)
(4-2) non-surface-treated aluminum hydroxide (trade name: BF-013 manufactured by Nippon Light Metal Company, Ltd.)

(c) Silicone-based lubricant:

(5) silicone gum (trade name: X-21-3043 manufactured by Shin-Etsu Polymer Co., Ltd.) (weight average molecular weight: 100000 or more, kinematic viscosity at 25°C: 1000000 cSt)

(d) Optional components:

(6) hindered phenol-based antioxidant (trade name: Irganox 1076 manufactured by BASF, Ltd.)
(7) hindered phenol-based weathering stabilizer (trade name: Tinuvin 111FDL manufactured by BASF, Ltd.)
(8) titanium white (titanium oxide) (trade name: CR-60 manufactured by Ishihara Sangyo Kaisha, Ltd.)
(9) melamine cyanurate (trade name: MC 6000 manufactured by Nissan Chemical Industries, Limited)

[Test Example 1]

For the obtained optical cables of Examples 1 to 12 and Comparative Examples 1 to 10, tests for "1. Extrusion moldability (1)", "2. Extrusion moldability (2)", "3. Tensile test", "4. 60° Inclining combustion test", "5. Vertical multi-strip combustion test" and "6. Kinematic friction coefficient between optical cables" were conducted using the test methods shown below, and comparison/evaluation was performed. The results are shown in Table 1 (examples) and Table 2 (comparative examples). For the "3. Tensile test", a sheet was produced under substantially the same conditions as in extrusion-covering of the optical cable, and the sheet was evaluated.

1. Extrusion moldability (1)

The stability of the cable outer diameter was evaluated when extrusion was performed under the above-mentioned conditions. Samples with the outer diameter variation being within ±0.04 mm in the short diameter direction (1.66 mm) were rated "○", and samples with the outer diameter variation falling out of ±0.04 mm in the short diameter direction were rated "×". Samples with the outer diameter variation being within ±0.02 mm in the short diameter direction were rated "⊙".

2. Extrusion moldability (2)

Samples with no foaming observed in the flame-retardant resin composition when extrusion was performed under the above-mentioned conditions were rated "○", and samples with foaming observed in the flame-retardant resin composition were rated "×"

3. Tensile test

The resin composition was extrusion-molded in the form of a sheet in such a manner that the thickness thereof was 1 mm, the sheet was punched into a dumbbell shape of type 5 in JIS K7127 to obtain a sample, and a tensile strength at break (MPa) and a tensile elongation at break (%) were each measured at a tensile speed of 200 mm/minute for the sample. Samples having a tensile strength at break of 4.9 MPa or more and a tensile elongation at break of 100% or more were rated "○", and samples having a less tensile strength at break and tensile elongation at break were rated "×". Samples having a tensile strength at break of 15 MPa or more and a tensile elongation at break of 150% or more were rated "⊙".

4. 60° Inclining combustion test

In accordance with JISC 3005, one optical cable sample was inclined to an angle of 60°, and laid in such a manner that it was not slackened, and the lower part of the sample was then kept in contact with a flame from a burner until flame reaction occurred (for about 3 to 5 seconds). Samples for which the flame was self-extinguished in 60 seconds after separation from fire were rated "○", and samples for which the flame was not self-extinguished in 60 seconds after separation from fire were rated "×". Further, samples rated "○" were kept in contact with a flame for 10 seconds, and then separated from fire to check again whether the flame was self-extinguished in 60 seconds, and samples for which the flame was self-extinguished in 60 seconds were rated "⊙".

5. Vertical multi-strip combustion test

In accordance with IEEE St.383, a plurality of optical cable samples were laid vertically, and the lower part of each of the samples was fired by a burner for 20 minutes. Samples having a char length of 1.5 m or less after 20 minutes were rated "○", and samples having a char length of more than 1.5 m after 20 minutes were rated "×"

6. Kinematic friction coefficient between optical cables

As an index of wire insertability, a kinematic friction coefficient between optical cables was measured. Two 150 mm-long optical cables were adjacently arranged side by side, and a 300 mm-long optical cable of which friction coefficient

was to be measured was stacked. Further, two adjacent 150 mm-long optical cables were stacked thereon. Thereafter, a load of 19.6 N was applied from above, and in this state, the 300 mm-long optical cable was pulled out at a speed of 500 mm/minute. The frictional force (pull-out force) at this time was defined as F, an average of lower limits in the obtained chart after passing a peak frictional force (static frictional force) at the start of movement was employed, and a kinematic friction coefficient μ (= F/19.6 N) was determined. The test was conducted in an environment at a temperature of 23°C ± 2°C and a humidity of 50% ± 10%. Samples having a kinematic friction coefficient μ of 0.25 or less were rated "○", and samples having a kinematic coefficient of more than 0.25 m were rated "×". Samples having a kinematic friction coefficient μ of 0.20 or less were rated "⊙".

(Examples)

[Table 1]

| | Type | Material name | Examples | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| (A) Resin component | (a1) Ethylene-α olefin copolymer | NOVATEC UE320 (density: 0.922 $g/cm^3$) | 85 | 70 | 98 | 85 | 85 | | | 85 | 85 | 85 | 85 | 85 |
| | | Evolue SP0540 (density: 0.903 $g/cm^3$) | | | | | | 70 | | | | | | |
| | | Evolue SP4030 (density: 0.938 $g/cm^3$) | | | | | | | 98 | | | | | |
| | | KERNEL KF360T (density: 0.898 $g/cm^3$) | | | | | | | | | | | | |
| | | UMERIT 4540F (density: 0.944 $g/cm^3$) | | | | | | | | | | | | |
| | (a2) Unsaturated carboxylic acid-modified polyolefin resin | Fusabond E226Y | 15 | 30 | 2 | 15 | 15 | 30 | 2 | 15 | 15 | 15 | 15 | 15 |
| Flame retardant | (b1) Magnesium hydroxide | KISUMA 5L (surface-treated with silane) | 150 | 150 | 150 | 95 | 220 | 150 | 150 | | 150 | 150 | 150 | 150 |
| | | KISUMA 5 (non-surface-treated) | | | | | | | | 150 | | | | |
| | (b2) Aluminum hydroxide | HIGILITE H42ST-V (surface-treated with silane) | | | | | | | | | 50 | | | |
| | | BF-013 (non-surface-treated) | 50 | 50 | 50 | 100 | 15 | 50 | 50 | 50 | 50 | 50 | 50 | 50 |
| Lubricant | (c) Silicone-based lubricant | X21-3043 (silicone gum) | 9 | 9 | 9 | 9 | 9 | 9 | 9 | 3 | 9 | 2 | 15 | 9 |

(continued)

| | Type | Material name | Examples | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| (d) Optional components | Hindered phenol-based antioxidant | Irganox 1076 | 1 | 1 | 1 | 1 | 1 | 1 | 1 | 1 | 1 | 1 | 1 | 1 |
| | Hindered amine-based weathering stabilizer | Tinuvin 111FDL | 0.3 | 0.3 | 0.3 | 0.3 | 0.3 | 0.3 | 0.3 | 0.3 | 0.3 | 0.3 | 0.3 | 0.3 |
| | Titanium white | CR-60 | 2 | 2 | 2 | 2 | 2 | 2 | 2 | 2 | 2 | 2 | 2 | 2 |
| | Melamine cyanurate | MC 6000 | | | | | | | | | | | | 20 |
| Evaluation | Extrusion moldability (1) | Outer diameter variation ±0.04 mm: ○, outer diameter variation ±0.02 mm: ⊙ | ⊙ | ⊙ | ⊙ | ⊙ | ⊙ | ⊙ | ⊙ | ⊙ | ⊙ | ⊙ | ○ | ⊙ |
| | Extrusion moldability (2) | No foaming: ○ | ○ | ○ | ○ | ○ | ○ | ○ | ○ | ○ | ○ | ○ | ○ | ○ |
| | Tensile strength at break | 4.9 MPa or more: ○, 15 MPa or more: ⊙ | ⊙ | ⊙ | ○ | ○ | ○ | ○ | ⊙ | ○ | ⊙ | ⊙ | ⊙ | ⊙ |
| | Tensile elongation at break | 100% or more: ○, 150% or more: ⊙ | ⊙ | ○ | ⊙ | ⊙ | ○ | ⊙ | ○ | ⊙ | ○ | ⊙ | ⊙ | ⊙ |
| | 60° inclining combustion test | Acceptable in flame contact for flame reaction: ○, acceptable in flame contact for 10 seconds: ⊙ | ⊙ | ⊙ | ⊙ | ⊙ | ○ | ⊙ | ⊙ | ⊙ | ⊙ | ⊙ | ⊙ | ⊙ |
| | Vertical multi-strip combustion test | Acceptable when char length is 1.5 m or less: ○ | ○ | ○ | ○ | ○ | ○ | ○ | ○ | ○ | ○ | ○ | ○ | ○ |
| | Kinematic friction coefficient | 0.25 or less: ○, 0.20 or less: ⊙ | ⊙ | ⊙ | ○ | ○ | ⊙ | ○ | ⊙ | ○ | ⊙ | ○ | ⊙ | ⊙ |

(Comparative Examples)

[Table 2]

| | Type | Material name | Comparative Examples | | | | | | | | | |
|---|---|---|---|---|---|---|---|---|---|---|---|---|
| | | | 1 | 2 | 3 | 4 | 5 | 6 | 7 | 8 | 9 | 10 |
| (A) Resin component | (a1) Ethylene-α olefin copolymer | NOVATEC UE320 (density: 0.922 g/$cm^3$) | 65 | 99 | | | 85 | 85 | 85 | 85 | 85 | 85 |
| | | Evolue SP0540 (density: 0.903 g/$cm^3$) | | | | | | | | | | |
| | | Evolue SP4030 (density: 0.938 g/$cm^3$) | | | | | | | | | | |
| | | KERNEL KF360T (density: 0.898 g/$cm^3$) | | | 85 | | | | | | | |
| | | UMERIT 4540F (density: 0.944 g/$cm^3$) | | | | 85 | | | | | | |
| | (a2) Unsaturated carboxylic acid-modified polyolefin resin | Fusabond E226Y | 35 | 1 | 15 | 15 | 15 | 15 | 15 | 15 | 15 | 15 |
| Flame retardant | (b1) Magnesium hydroxide | KISUMA 5L (surface-treated with silane) | 150 | 150 | 150 | 150 | 90 | 225 | 100 | 150 | 150 | 150 |
| | | KISUMA 5 (non-surface-treated) | | | | | | | | | | |
| | (b2) Aluminum hydroxide | HIGILITE H42ST-V (surface-treated with silane) | | | | | | | | | | |
| | | BF-013 (non-surface-treated) | 50 | 50 | 50 | 50 | 50 | 50 | 105 | 10 | 50 | 50 |
| Lubricant | (c) Silicone-based lubricant | X21-3043 (silicone gum) | 9 | 9 | 9 | 9 | 9 | 9 | 9 | 9 | 1 | 16 |
| (d) Optional components | Hindered phenol-based antioxidant | Irganox 1076 | 1 | 1 | 1 | 1 | 1 | 1 | 1 | 1 | 1 | 1 |
| | Hindered amine-based weathering stabilizer | Tinuvin 111FDL | 0.3 | 0.3 | 0.3 | 0.3 | 0.3 | 0.3 | 0.3 | 0.3 | 0.3 | 0.3 |
| | Titanium white | CR-60 | 2 | 2 | 2 | 2 | 2 | 2 | 2 | 2 | 2 | 2 |
| | Melamine cyanurate | MC 6000 | | | | | | | | | | |

(continued)

| | Type | Material name | Comparative Examples | | | | | | | | | |
|---|---|---|---|---|---|---|---|---|---|---|---|---|
| | | | 1 | 2 | 3 | 4 | 5 | 6 | 7 | 8 | 9 | 10 |
| Evaluation | Extrusion moldability (1) | Outer diameter variation ±0.04 mm: ○, outer diameter variation ±0.02 mm: ⊙ | ⊙ | ⊙ | ⊙ | ⊙ | ⊙ | ⊙ | ⊙ | ⊙ | ⊙ | × |
| | Extrusion moldability (2) | No foaming: ○ | ○ | ○ | ○ | ○ | ○ | ○ | × | ○ | ○ | ○ |
| | Tensile strength at break | 4.9 MPa or more: ○, 15 MPa or more: ⊙ | ⊙ | ○ | ○ | ⊙ | ⊙ | ○ | ○ | ⊙ | ⊙ | ⊙ |
| | Tensile elongation at break | 100% or more: ○, 150% or more: ⊙ | × | ⊙ | ⊙ | × | ⊙ | × | ⊙ | ⊙ | ⊙ | ⊙ |
| | 60° inclining combustion test | Acceptable in flame contact for flame reaction: ○, acceptable in flame contact for 10 seconds: ⊙ | ⊙ | ⊙ | ⊙ | ⊙ | ○ | ⊙ | ⊙ | ○ | ⊙ | ⊙ |
| | Vertical multi-strip combustion test | Acceptable when char length is 1.5 m or less: ○ | ○ | ○ | ○ | ○ | × | ○ | ○ | × | ○ | ○ |
| | Kinematic friction coefficient | 0.25 or less: ○, 0.20 or less: ⊙ | ⊙ | × | × | ⊙ | ○ | ⊙ | ○ | ○ | × | ⊙ |

As shown in Table 1, the optical cables of Examples 1 to 12 which were composed of the flame-retardant resin composition according to the present invention were acceptable for all the items.

On the other hand, as shown in Table 2, the optical cable of Comparative Example 1 which had a lower content of the (a1) ethylene-α olefin copolymer (higher content of the (a2) polyolefin modified with an unsaturated carboxylic acid) as compared to the configuration of the present invention had poor elongation characteristics, and the optical cable of Comparative Example 2 which had a higher content of the (a1) ethylene-α olefin copolymer (lower content of the (a2) polyolefin modified with an unsaturated carboxylic acid) as compared to the configuration of the present invention had a large kinematic friction coefficient, and hence poor slipperiness.

The optical cable of Comparative Example 3 which had a lower density of the (a1) ethylene-α olefin copolymer as compared to the configuration of the present invention had a large kinematic friction coefficient and poor slipperiness, and the optical cable of Comparative Example 4 which had a higher density of the (a1) ethylene-α olefin copolymer as compared to the configuration of the present invention had poor elongation characteristics.

The optical cable of Comparative Example 5 which had a lower content of (b1) magnesium hydroxide as compared to the configuration of the present invention exhibited poor results of the vertical multi-strip combustion test, and had a problem in flame retardancy, and the optical cable of Comparative Example 6 which had a higher content of (b1) magnesium hydroxide as compared to the configuration of the present invention had poor elongation characteristics.

The optical cable of Comparative Example 7 which had a higher content of (b2) aluminum hydroxide as compared to the configuration of the present invention had poor extrusion moldability with foaming observed in extrusion moldability (2), and the optical cable of Comparative Example 8 which had a lower content of (b2) aluminum hydroxide as compared to the configuration of the present invention exhibited poor results of the vertical multi-strip combustion test, and had a problem in flame retardancy similarly to Comparative Example 5.

The optical cable of Comparative Example 9 which had a lower content of the (c) silicone-based lubricant had a large kinematic friction coefficient, and hence poor slipperiness, and the optical cable of Comparative Example 10 which had a higher content of the (c) silicone-based lubricant did not satisfy the standard for the outer diameter variation extrusion in extrusion moldability, and had a problem in extrusion moldability.

Industrial Applicability

The flame-retardant resin composition of the present invention is excellent in extrusion moldability, mechanical characteristics, flame retardancy and the like, and ensures that the surface of a molded product has reduced friction, and therefore the flame-retardant resin composition can be effectively used as a covering material etc. of an optical cable excellent in wire insertability. Thus, the present invention has high industrial applicability.

Reference Signs List

1: Optical cable
2: Covering material (flame-retardant resin composition)
3: Glass optical fiber
4: Tension member
5: Adhesive layer
6: Notch

## Claims

**1.** A flame-retardant resin composition comprising as (A) a resin component components (a1) and (a2):

(a1) at least one of polyethylene and an ethylene-α olefin copolymer each having a density of 0.900 to 0.940g/$cm^3$: 70 to 98% by mass based on the total amount of the (A) resin component; and
(a2) a polyolefin resin modified with an unsaturated carboxylic acid: 2 to 30% by mass based on the total amount of the (A) resin component, wherein
the flame-retardant resin composition contains:

95 to 220 parts by mass of (b1) magnesium hydroxide;
15 to 100 parts by mass of (b2) aluminum hydroxide; and
2 to 15 parts by mass of (c) a silicone-based lubricant based on 100 parts by mass of the (A) resin component.

**2.** The flame-retardant resin composition according to claim 1, wherein at least one of the (b1) magnesium hydroxide and the (b2) aluminum hydroxide is surface-treated with a silane coupling agent.

**3.** The flame-retardant resin composition according to claim 1 or 2, wherein the flame-retardant resin composition is used in an optical cable.

**4.** An optical cable comprising as a covering material the flame-retardant resin composition according to any one of claims 1 to 3.

## Patentansprüche

**1.** Flammenhemmende Harzzusammensetzung, umfassend als (A) Harzverbindungskomponenten (a1) und (a2);

(a1) mindestens eines von Polyethylen und eines Ethylen-α-Olefin-Copolymers, von denen jedes eine Massendichte von 0,900 bis 0,940g/$cm^3$: 70 zu 98 Massenprozent basierend auf der Gesamtmenge der (A) Harzkomponente aufweist; und
(a2) ein Polyolefinharz, modifiziert mit einer ungesättigten Carbonsäure: 2 bis 30 Massenprozent, basierend auf der Gesamtmenge der (A) Harzkomponente, wobei
die flammenhemmende Harzkomponente Folgendes umfasst:

95 bis 220 Massenteile (b1) Magnesiumhydroxid;
15 bis 100 Massenteile (b2) Aluminumhydroxid; und
2 bis 15 Massenteile (c) eines Silikon-basierten Schmiermittels, basierend auf 100 Massenteilen der (A) Harzkomponente.

**2.** Flammenhemmende Harzzusammensetzung nach Anspruch 1, wobei mindestens eines des (b1) Magnesiumhydroxids und des (b2) Aluminiumhydroxids mit einem Silanhaftvermittler oberflächenbehandelt ist.

**3.** Flammenhemmende Harzzusammensetzung nach Anspruch 1 oder 2, wobei die flammenhemmende Harzzusammensetzung in einem optischen Kabel verwendet wird.

**4.** Optisches Kabel, umfassend als Abdeckmaterial die flammenhemmende Harzzusammensetzung nach einem der Ansprüche 1 bis 3.

## Revendications

**1.** Composition de résine ignifuge comprenant en tant que composant de résine (A) les composants (a1) et (a2) :

(a1) au moins un parmi un polyéthylène et un copolymère d'éthylène-α-oléfine chacun présentant une masse volumique de 0,900 à 0,940 g/$cm^3$ : 70 à 98 % en masse sur la base de la quantité totale du composant de résine (A) ; et
(a2) une résine de polyoléfine modifiée avec un acide carboxylique insaturé : 2 à 30 % en masse sur la base de la quantité totale du composant de résine (A), dans laquelle
la composition de résine ignifuge contient :

95 à 220 parties en masse d'hydroxyde de magnésium (b1) ;
15 à 100 parties en masse d'hydroxyde d'aluminium (b2) ; et
2 à 15 parties en masse d'un lubrifiant à base de silicone (c) sur la base de 100 parties en masse du composant de résine (A).

**2.** Composition de résine ignifuge selon la revendication 1, dans laquelle au moins un parmi l'hydroxyde de magnésium (b1) et l'hydroxyde d'aluminium (b2) est traité en surface avec un agent de couplage à base de silane.

**3.** Composition de résine ignifuge selon la revendication 1 ou 2, dans laquelle la composition de résine ignifuge est utilisée dans un câble optique.

**4.** Câble optique comprenant comme matériau de recouvrement la composition de résine ignifuge selon l'une quelconque des revendications 1 à 3.

[Fig. 1]

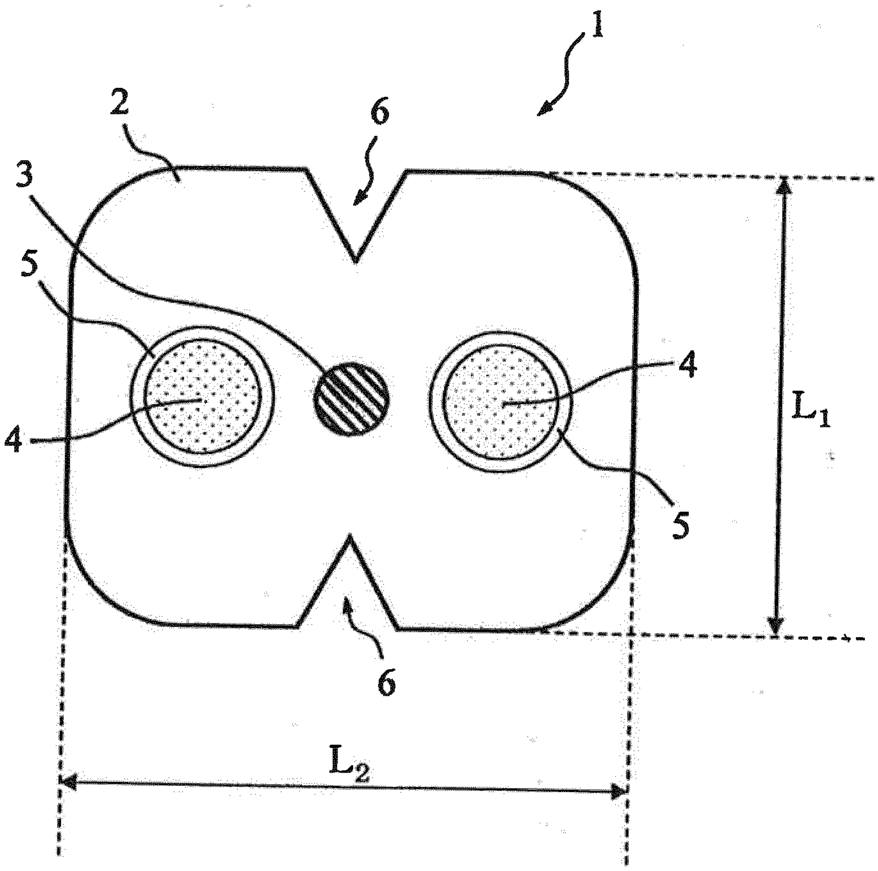

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10324782 A
- JP 11012397 A
- JP 2000327853 A
- JP 2007504339 W
- JP 2008007723 A